# FASCICULE DE BREVET EUROPEEN

(11) **EP 3 844 093 B1**
(45) Date de publication et mention de la délivrance du brevet: **08.11.2023**
(21) Numéro de dépôt: 19774155.6
(22) Date de dépôt: 30.08.2019
(51) Int. Cl.: B66F 9/065, B66F 9/075, B60G 17/015, B66F 17/00, B60G 9/02

(54) **ENGIN DE LEVAGE NOTAMMENT POUR LA MANUTENTION DE CHARGES**
HEBEMASCHINE, INSBESONDERE ZUR HANDHABUNG VON LASTEN
LIFTING MACHINE IN PARTICULAR FOR HANDLING LOADS

(30) Priorité: 31.08.2018 FR 1857867
(43) Date de publication de la demande: 07.07.2021
(73) Titulaire: MANITOU BF, 44150 Ancenis (FR)
(72) Inventeur: CHAILLOU, Vincent, 44150 Ancenis (FR)
(74) Mandataire: Ipsilon
(86) Numéro de dépôt international: PCT/FR2019/052000
(87) Numéro de publication internationale: WO 2020/043992

(56) Documents cités:
- EP-A1- 1 698 497
- EP-A1- 2 544 985
- DE-A1-102014 113 998
- US-A- 3 937 339
- US-A- 5 813 697

## Description

L'invention concerne un engin de levage notamment pour la manutention de charges.

Elle concerne plus particulièrement un engin de levage comprenant un châssis, un bras de levage monté sur ledit châssis, mobile au moins à pivotement entre une position haute et une position basse, au moins un capteur de mesure de l'inclinaison du bras de levage par rapport au châssis, ledit châssis étant un châssis roulant équipé d'au moins un essieu avant et un essieu arrière, l'essieu arrière étant monté pivotant autour d'un axe parallèle à l'axe longitudinal de l'engin, au moins l'un des essieux étant un essieu dit suspendu équipé d'une suspension.

De tels engins de levage sont amenés à circuler sur des terrains accidentés. Il en résulte un mouvement de roulis du châssis par rapport au sol. Ce roulis est inconfortable pour le conducteur. Pour atténuer ce roulis, il est connu de monter la cabine du conducteur sur amortisseurs. Cette solution s'avère toutefois onéreuse. Il est également connu d'équiper l'engin d'un unique essieu oscillant de manière libre à pivotement comme l'illustre le brevet US 5,813,697.

Un but de l'invention est de proposer un engin de levage dont la conception permet d'accroitre le confort de conduite du conducteur sans nuire à la sécurité de l'engin.

A cet effet, l'invention a pour objet un engin de levage selon la revendication 1.

La réalisation de deux essieux oscillants avec la possibilité de désactiver dans des conditions définies la suspension de l'un des essieux permet d'augmenter le confort de conduite sans nuire à la sécurité de l'engin. Cette réalisation permet dans certaines conditions de disposer de deux essieux oscillants montés libres à pivotement sans nuire à la sécurité du conducteur de l'engin.

Selon l'invention, l'engin présente au moins une configuration dans laquelle l'essieu arrière pivotant est monté libre à pivotement et la suspension équipant l'essieu avant est à l'état activé pour un montage libre à pivotement de l'essieu avant. Ainsi, à l'état activé de la suspension, les deux essieux sont montés libres à pivotement pour un confort de conduite optimal sans nuire à la sécurité de l'engin.

Selon un mode de réalisation de l'invention, l'engin comprend un organe d'activation/désactivation de la suspension actionnable par le conducteur de l'engin.

Selon un mode de réalisation de l'invention, l'engin comprend une unité de pilotage configurée pour commander une activation ou une désactivation de la suspension au moins en fonction des données fournies par le capteur de mesure de l'inclinaison du bras de levage.

Selon l'invention, la suspension de l'essieu avant comprend au moins un actionneur hydraulique disposé entre l'essieu avant et le châssis et reliant l'essieu avant au châssis, un ou plusieurs amortisseurs, et au moins une liaison fluidique obturable entre l'actionneur et le ou les amortisseurs, ladite suspension étant désactivée à l'état obturé de la liaison fluidique.

Selon l'invention, l'unité de pilotage et/ou l'organe d'activation/désactivation de la suspension actionnable par le conducteur de l'engin sont configurés pour commander une activation de la suspension par ouverture de la liaison fluidique et une désactivation de la suspension par fermeture de la liaison fluidique.

Selon un mode de réalisation de l'invention, l'engin comprend un dispositif de commande de l'actionneur comprenant un organe de commande de l'actionneur actionnable par le conducteur de l'engin et l'unité de pilotage est configurée pour commander la désactivation de la suspension à l'état actionné de l'organe de commande de l'actionneur actionnable par le conducteur de l'engin. Ainsi, une fonction de correction du dévers peut être remplie à l'aide dudit actionneur.

Selon un mode de réalisation de l'invention, le dispositif de commande de l'actionneur comprend un distributeur hydraulique interposé entre une source d'alimentation en fluide sous pression et l'actionneur, ledit distributeur étant monté mobile entre des positions comprenant au moins une position de non alimentation en fluide de l'actionneur et des positions d'alimentation en fluide de l'actionneur, ledit distributeur étant en position d'alimentation en fluide de l'actionneur à l'état actionné de l'organe de commande de l'actionneur actionnable par le conducteur de l'engin.

Selon un mode de réalisation de l'invention, le châssis comprend une cabine de conduite équipée d'un plancher, l'engin comprend un capteur de mesure représentatif de l'angle formé entre le plan du plancher et l'axe longitudinal de l'essieu avant du châssis et l'unité de pilotage est configurée pour, à l'état désactivé de la suspension et non actionné de l'organe de commande du dispositif de commande de l'actionneur, interdire l'activation de la suspension au moins lorsque l'angle mesuré par le capteur de mesure de l'angle formé entre le plan du plancher et l'axe longitudinal de l'essieu avant du châssis est à l'extérieur d'une plage angulaire prédéterminée. Ainsi, tout risque d'accroitre l'instabilité latérale de l'engin dans ces conditions est exclu.

Selon un mode de réalisation de l'invention, l'actionneur est formé par un vérin hydraulique double effet ou deux vérins hydrauliques simple effet disposés chacun entre l'essieu avant et le châssis, le ou chaque vérin de l'actionneur comprend un corps et une tige montée mobile à coulissement à l'intérieur du corps et divisant le corps en deux chambres et la tige du ou de chaque vérin est montée libre à coulissement à l'intérieur dudit corps de vérin associé à l'état ouvert de la liaison fluidique obturable entre l'actionneur et le ou les amortisseurs.

Selon l'invention, le ou au moins l'un, de préférence chacun, des amortisseurs est formée par un accumulateur d'énergie restituable, tel qu'un accumulateur hydraulique ou hydropneumatique, en particulier un accumulateur à vessie, ou à piston, ou à membrane.

Selon un mode de réalisation de l'invention, l'engin comprend un capteur de mesure de la vitesse de déplacement de l'engin et un capteur de mesure de l'angle de braquage des roues de l'essieu avant et l'unité de pilotage est configurée pour commander une désactivation de la suspension au moins en fonction des données fournies par lesdits capteurs.

L'invention sera bien comprise à la lecture de la description suivante d'exemples de réalisation, en référence aux dessins annexés dans lesquels :

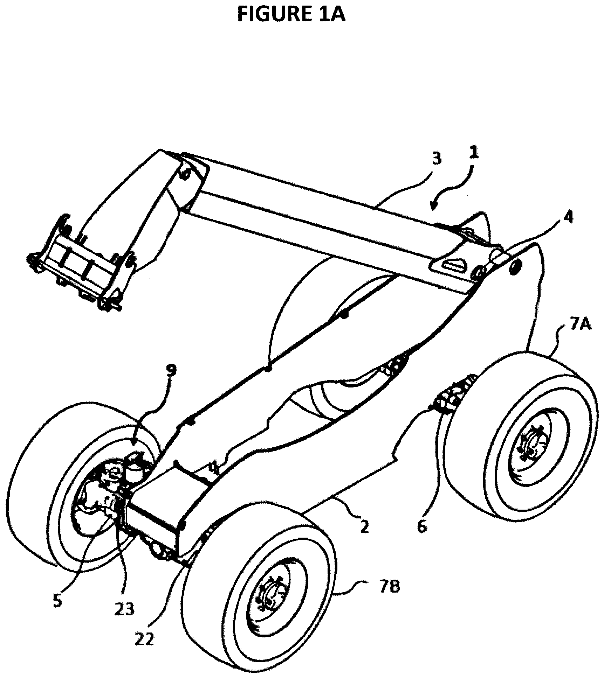

La figure 1A représente une vue schématique partielle en perspective d'un engin de levage conforme à l'invention ;

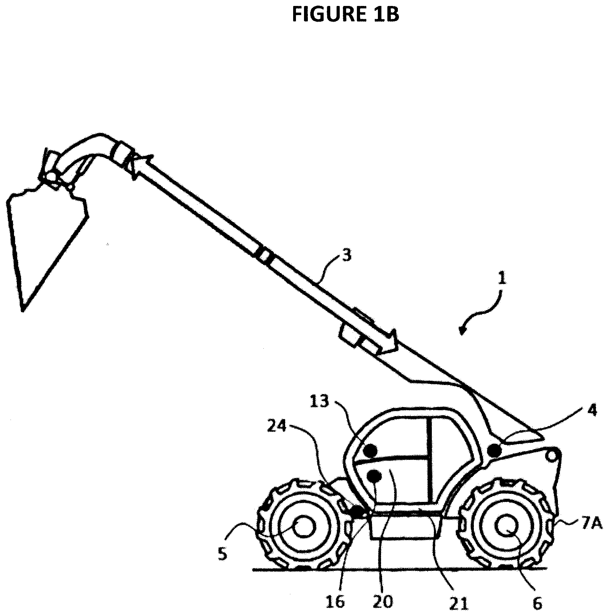

La figure 1B représente une vue schématique en perspective d'un engin de levage conforme à l'invention, la cabine de conduite ayant été représentée ;

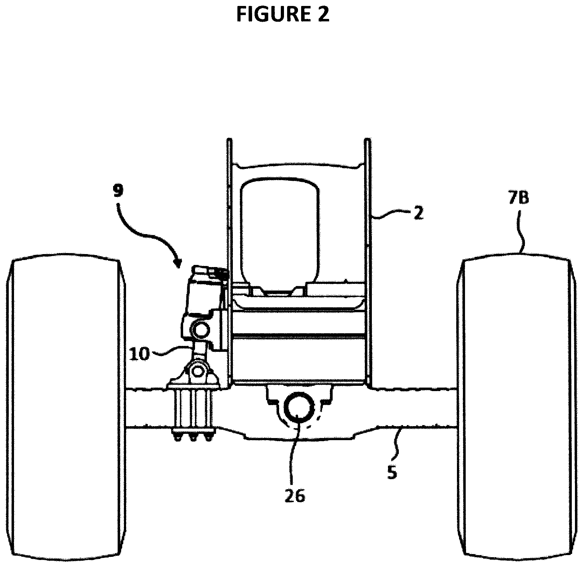

La figure 2 représente une vue schématique partielle de l'essieu avant d'un engin de levage conforme à l'invention ;
La figure 3 représente une vue schématique partielle de l'essieu arrière d'un engin de levage conforme à l'invention ;
La figure 4 représente une vue schématique partielle de l'essieu avant d'un engin de levage conforme à l'invention, l'actionneur étant un vérin double effet ;
La figure 5 représente une vue schématique partielle de l'essieu avant d'un engin de levage conforme à l'invention, l'actionneur étant formé de deux vérins simple effet ;
La figure 6 représente une vue schématique simplifiée de la suspension et de l'unité de pilotage d'un engin de levage conforme à l'invention, l'actionneur de la suspension étant un vérin double effet et,
La figure 7 représente une vue schématique simplifiée de la suspension et de l'unité de pilotage d'un engin de levage conforme à l'invention, l'actionneur de la suspension étant formé de deux vérins simple effet.

Comme mentionné ci-dessus, l'engin 1 de levage est plus particulièrement destiné à permettre la manutention de charges. Cet engin 1 comprend un châssis 2 surmonté d'un bras 3 de levage. Ce bras 3 de levage peut être un bras télescopique. Le bras 3 de levage est généralement équipé, à son extrémité libre, d'un outil de manutention de charges tel qu'un godet, des fourches ou autre accessoire. Ce bras 3 de levage est couplé à pivotement au châssis 2 pour le déplacement du bras 3 de levage entre une position haute et une position basse. A cet effet, un ou plusieurs actionneurs, tels que des vérins non représentés, sont prévus entre le bras de levage et le châssis 2 de manière en soi connue, le pivotement s'opérant autour d'un axe dit horizontal, c'est-à-dire sensiblement parallèle au plan du sol lorsque l'engin repose sur un plan horizontal.

Ce bras 3 de levage s'étend suivant la direction avant/arrière du châssis 2 avec son extrémité libre positionnée au-delà de l'extrémité avant du châssis en position basse du bras 3 de levage. La liaison pivot reliant le bras 3 de levage au châssis 2 est donc disposée plus proche de l'arrière de l'engin que de l'avant de l'engin 1.

L'engin 1 comprend encore un capteur 4 de mesure de l'inclinaison du bras 3 de levage par rapport au châssis 2.

Le châssis 2 de l'engin comprend une cabine 20 de conduite à l'intérieur de laquelle un conducteur de l'engin peut prendre place. Dans l'exemple représenté, en position basse du bras 3 de levage, le bras repose sur une partie du châssis 2 à côté de la cabine 20 de conduite.

Le châssis 2 de l'engin est un châssis roulant équipé d'un essieu 5 avant et d'un essieu 6 arrière. La liaison pivot couplant le bras 3 de levage au châssis est disposée plus proche de l'essieu 6 arrière que de l'essieu 5 avant.

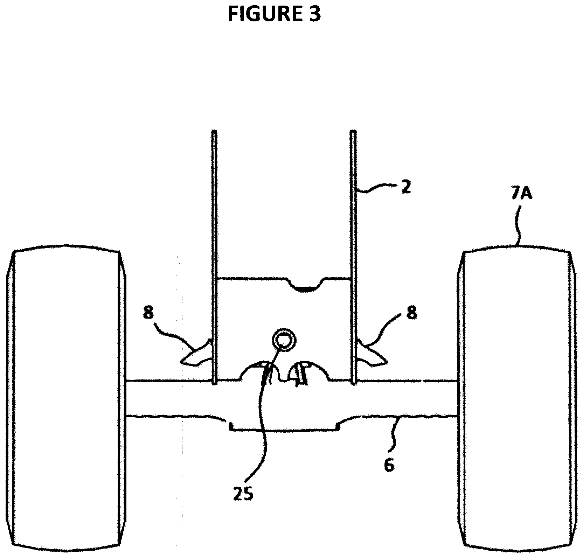

Chaque essieu est équipé de roues représentées en 7B pour l'essieu 5 avant et en 7A pour l'essieu 6 arrière. L'essieu 6 arrière est un essieu pivotant. L'essieu 6 arrière pivotant est couplé au châssis par une liaison pivot dont l'axe est représenté en 25en figure 3. Cet axe s'étend parallèlement à l'axe longitudinal horizontal du châssis de l'engin à l'état positionné à plat de l'engin ou parallèlement à la direction avant/arrière de l'engin. Cet essieu 6 arrière est monté libre à pivotement à l'intérieur d'une plage angulaire délimitée par deux butées 8 portées par ledit châssis 2 et s'étendant sur ledit châssis de part et d'autre de la liaison 25 pivot de couplage de l'essieu 6 arrière au châssis 2 au-dessus de ladite liaison.

L'essieu 6 arrière pivotant est monté de manière permanente libre à pivotement, c'est-à-dire qu'il n'existe pas de moyens de blocage de la liaison à pivotement entre l'essieu arrière et le châssis.

Ainsi, l'une des butées 8 délimite le déplacement de l'essieu 6 arrière dans le sens d'un déplacement vers le haut de la roue arrière gauche de l'engin, tandis que l'autre butée 8 limite le déplacement à pivotement de l'essieu 6 arrière dans le sens d'un déplacement vers le haut de la roue arrière droite de l'engin. L'essieu 5 avant est également un essieu oscillant couplé au châssis par une liaison pivot 26 d'axe pivot parallèle à l'axe longitudinal de l'engin 1. La réalisation d'un essieu pivotant ou oscillant permet aux roues de l'engin de mieux suivre le profil du sol, en particulier dans le cas d'un sol irrégulier.

Cet essieu 5 avant est équipé d'une suspension 9 pour amortir les mouvements de pivotement de l'essieu 5 avant par rapport au châssis 2. Cette suspension 9 est une suspension activable/désactivable.

Cette suspension 9 de l'essieu 5 avant comprend un actionneur 10 hydraulique disposé entre l'essieu 5 avant et le châssis 2 et reliant l'essieu 5 avant au châssis 2, des amortisseurs 11 et une liaison 12 fluidique obturable entre l'actionneur 10 et les amortisseurs 11, la suspension 9 étant désactivée en l'état obturé de la liaison 12 fluidique.

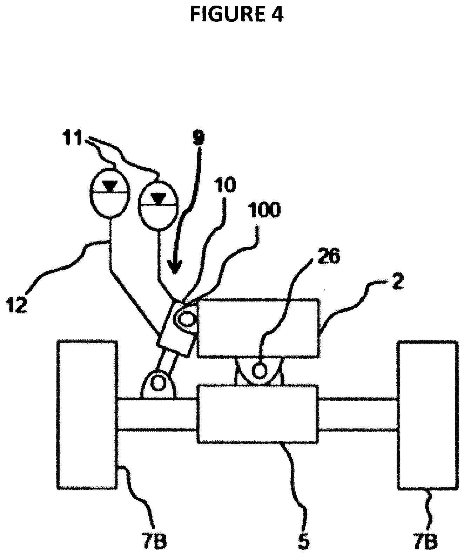

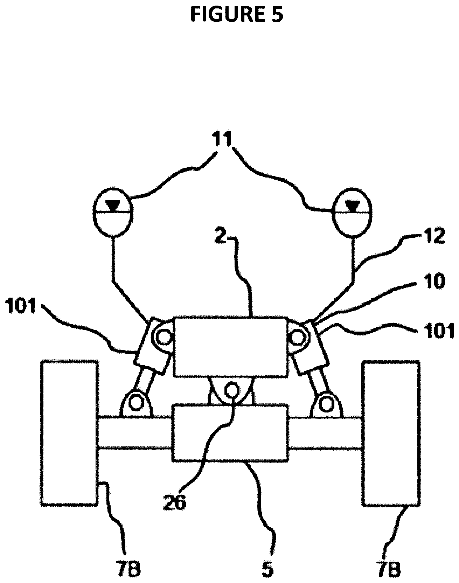

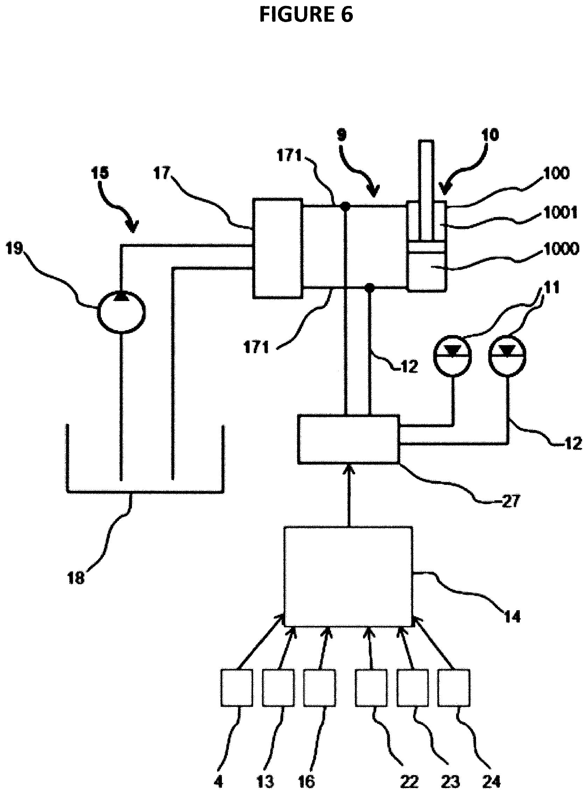

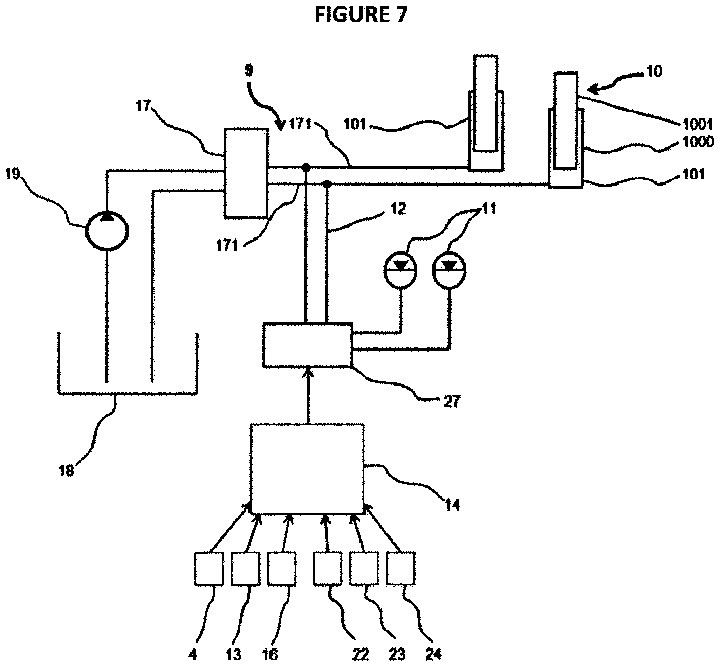

L'actionneur 10 peut être formé d'un vérin 100 hydraulique double effet comme illustré aux figures 4 et 6 ou de deux vérins 101 hydrauliques simple effet disposés chacun entre l'essieu 5 avant et le châssis 2 de part et d'autre de la liaison 26 pivot comme illustré aux figures 5 et 7.

Indépendamment de la conception du vérin simple effet ou double effet, ce vérin comprend un corps 1000 et une tige 1001 montée mobile à coulissement à l'intérieur du corps 1000 et divisant le corps 1000 en deux chambres. Ainsi, la tige 1001 est couplée au châssis 2 et le corps 1000 à l'essieu 5 avant, ou inversement. L'actionneur 10 est donc apte à être sollicité lors d'un déplacement relatif à pivotement de l'essieu avant et du châssis 2.

Les amortisseurs 11 sont, quant à eux, formés chacun par un accumulateur d'énergie restituable, tel qu'un accumulateur hydraulique ou hydropneumatique, en particulier un accumulateur à vessie, ou à piston, ou à membrane ou similaire.

Ces amortisseurs 11 sont soit reliés l'un, à la chambre de l'un des vérins, l'autre, à la chambre de l'autre vérin lorsque l'actionneur est un actionneur formé de deux vérins 101 simple effet comme dans l'exemple de la figure 7, soit reliés l'un, à l'une des chambres, l'autre, à l'autre chambre du vérin lorsque l'actionneur est un vérin 100 double effet comme dans l'exemple représenté à la figure 6.

Chaque amortisseur 11 permet, lorsque cela est nécessaire, d'emmagasiner un fluide sous pression issu de l'actionneur 10 puis de le restituer ultérieurement. Le détail du fonctionnement de tels accumulateurs ne sera pas décrit en détail car il est bien connu à ceux versés dans cet art.

Ainsi, l'un des amortisseurs permet un amortissement lorsque l'essieu 5 avant pivote suivant une direction correspondant, par exemple, à un déplacement vers le haut de la roue avant gauche tandis que l'autre amortisseur permet un amortissement lorsque l'essieu 5 avant pivote suivant une direction correspondant par exemple à un déplacement vers le haut de la roue avant droite.

La liaison fluidique qui relie ces amortisseurs 11 à l'actionneur 10 est représentée en 12 aux figures. Cette liaison fluidique 12 comprend deux lignes de circulation de fluide qui, dans le cas d'un vérin double effet, relient, l'une, une chambre dudit vérin à l'un des accumulateurs, l'autre, l'autre chambre du vérin à l'autre accumulateur, ou dans le cas de deux vérins simple effet, l'une, la chambre dite active de l'un des vérins à l'un des accumulateurs, l'autre, la chambre dite active de l'autre des vérins à l'autre accumulateur.

Cette liaison 12 est obturable par un système 27 d'obturation qui permet une obturation simultanée des deux lignes de la liaison 12 fluidique. Dans les exemples représentés, ce système 27 d'obturation est formé par un distributeur qui dans l'une de ses positions ferme ces deux lignes, et dans une autre de ses positions ouvre les deux lignes formant la liaison 12 fluidique entre les accumulateurs et l'actionneur. En variante, ce système 27 d'obturation aurait pu être remplacé par deux électrovannes à actionnement synchronisé et disposées chacune sur l'une des lignes de la liaison 12 fluidique.

A l'état ouvert de la liaison 12 fluidique obturable, la tige 1001 du vérin, dans le cas d'un vérin double effet, ou de chaque vérin, dans le cas de deux vérins simple effet, est montée libre à coulissement à l'intérieur du corps du vérin associé de sorte que dès que le vérin est sollicité, en raison du déplacement relatif à pivotement entre le châssis et l'essieu avant, une partie du fluide contenue dans le vérin est transférée vers l'accumulateur associé entraînant un amortissement du mouvement de pivotement relatif de l'essieu avant et du châssis 2. Ainsi, à l'état activé de la suspension 9, les essieux avant et arrière peuvent être montés libres à pivotement.

Pour désactiver la suspension 9 et empêcher un tel amortissement, il suffit de fermer la liaison 12 fluidique.

De manière caractéristique à l'invention, la suspension est désactivée au moins lorsque la valeur d'angle mesurée par le capteur 4 de mesure de l'inclinaison du bras 3 de levage est supérieure à une valeur seuil prédéterminée.

A cet effet, l'engin 1 comprend une unité 14 de pilotage configurée pour commander une activation ou une désactivation de la suspension 9 au moins en fonction des données fournies par le capteur 4 de mesure de l'inclinaison du bras 3 de levage.

Cette unité 4 de pilotage se présente sous la forme d'un système électronique et/ou informatique qui comprend par exemple un microprocesseur et une mémoire de travail. Selon un aspect particulier, l'unité de pilotage peut se présenter sous la forme d'un automate programmable.

Autrement dit, les fonctions et étapes décrites peuvent être mise en oeuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

L'engin peut également comprendre un organe 13 d'activation/désactivation de la suspension 9 actionnable par le conducteur de l'engin 1.

Cet organe 13 d'activation/désactivation peut être formé par un simple bouton de commande disposé au niveau du tableau de bord de l'engin ou sur un organe de commande, tel qu'un joystick, disposé à l'intérieur de la cabine 20 de l'engin et permettant l'actionnement du bras 3 de levage et l'avancement de l'engin 1.

L'unité 14 de pilotage et/ou l'organe 13 d'activation/désactivation de la suspension 9 actionnable par le conducteur de l'engin sont configurés pour commander une activation de la suspension 9 par ouverture de la liaison 12 fluidique et une désactivation de la suspension 9 par fermeture de la liaison 12 fluidique. En d'autres termes, l'unité 14 de pilotage et/ou l'organe 13 d'activation/désactivation de la suspension 9 actionnable par le conducteur de l'engin sont configurés de sorte que la liaison 12 fluidique est ouverte à l'état activé de la suspension 9 et la liaison 12 fluidique est fermée à l'état désactivé de la suspension 9.

Pour parfaire le fonctionnement de l'engin et permettre notamment, à l'état désactivé de la suspension, une correction du dévers par modification de la position relative à pivotement du châssis et de l'essieu avant, l'engin 1 comprend un dispositif 15 de commande de l'actionneur 10 décrit ci-dessus.

Ce dispositif 15 de commande permet de commander en fonctionnement le ou les vérins constitutifs de l'actionneur 10 dans le sens d'une sortie ou d'une rentrée de la tige du ou des vérins constitutifs de l'actionneur 10.

Ce dispositif 15 de commande de l'actionneur 10 comprend un organe 16 de commande de l'actionneur 10 actionnable par le conducteur de l'engin. Cet organe 16 de commande est disposé à l'intérieur de la cabine de conduite de l'engin et peut être formé par un levier ou similaire.

A l'état actionné de cet organe 16 de commande de l'actionneur 10, l'unité 14 de pilotage est configurée pour commander la désactivation de la suspension 9, c'est-à-dire fermer la liaison 12 fluidique si la suspension 9 était préalablement activée.

Le dispositif 15 de commande comprend encore un distributeur 17 hydraulique interposé entre une source 18 d'alimentation en fluide sous pression et l'actionneur 10, ledit distributeur 17 étant monté mobile entre des positions comprenant au moins une position de non alimentation en fluide de l'actionneur et des positions d'alimentation en fluide de l'actionneur 10, ledit distributeur 17 étant en position d'alimentation en fluide de l'actionneur 10 à l'état actionné de l'organe 16 de commande de l'actionneur 10 actionnable par le conducteur de l'engin.

Ce distributeur 17 hydraulique permet ainsi la rentrée ou la sortie de la tige du ou des vérins formant l'actionneur 10 en fonction du souhait du conducteur de l'engin.

La commande de cet actionneur 10 entraîne un déplacement relatif à pivotement de l'essieu 5 avant et du châssis 2 jusqu'à la position souhaitée par le conducteur de l'engin.

La source 18 d'alimentation de fluide sous pression comprend ici un réservoir de fluide et une pompe 19 disposés sur l'une des liaisons fluidiques reliant le réservoir au distributeur 17 hydraulique.

Ce distributeur 17 hydraulique alimente ensuite l'actionneur 10 via une liaison fluidique représentée en 171 aux figures. Cette liaison fluidique peut être partiellement commune avec la liaison 12 fluidique reliant l'actionneur 10 aux accumulateurs 11 étant entendu que le distributeur 17 hydraulique est en position fermée, c'est-à-dire de non-alimentation en fluide de l'actionneur 10, lorsque la liaison 12 fluidique est ouverte pour éviter une fuite du fluide circulant entre l'actionneur 10 et les amortisseurs ou accumulateurs 11 vers le réservoir de la source 18 d'alimentation en fluide sous pression via le distributeur hydraulique 17 à l'état activé de la suspension, c'est-à-dire ouvert de ladite liaison 12 fluidique.

De la même manière, quand le distributeur 17 hydraulique est en position d'alimentation en fluide de l'actionneur 10, la liaison 12 fluidique est obturée pour éviter une fuite du fluide hydraulique destiné à alimenter l'actionneur 10 vers les accumulateurs 11.

On note qu'à nouveau la liaison 171 fluidique entre le distributeur 17 hydraulique et l'actionneur 10 est formée de deux lignes servant l'une à l'alimentation de l'une des chambres du vérin dans le cas d'un actionneur formé d'un vérin double effet, ou l'une des chambres du premier vérin simple effet dans le cas d'un actionneur formé de deux vérins simple effet, l'autre ligne servant à l'alimentation de l'autre des chambres du vérin double effet, ou à l'alimentation de l'une des chambres du deuxième vérin simple effet.

L'alimentation en fluide de l'actionneur 10 via le distributeur 17 hydraulique piloté à l'aide de l'organe 16 de commande de l'actionneur 10 s'opère donc à l'état désactivé de la suspension, cette désactivation s'opérant dès que l'organe 16 de commande commence à être actionné par le conducteur de l'engin.

D'autres conditions de fonctionnement peuvent également amener à une désactivation de la suspension 9. Ainsi, l'engin 1 comprend un capteur 24 de mesure de la vitesse de déplacement de l'engin et un capteur 23 de mesure de l'angle de braquage des roues de l'essieu 5 avant et l'unité 14 de pilotage est configurée pour commander une désactivation de la suspension 9 au moins en fonction des données fournies par lesdits capteurs 23, 24.

Cette désactivation s'opère lorsque la vitesse d'avancement et le rayon de braquage sont trop importants, un risque d'instabilité latérale de l'engin existant.

Enfin, la cabine 20 de conduite de l'engin est équipée d'un plancher 21, et l'engin 1 comprend un capteur 22 de mesure représentatif de l'angle formé entre le plan du plancher 21 et l'axe longitudinal de l'essieu 5 avant du châssis 2. L'angle peut donc être mesuré de manière directe ou indirecte. L'unité 14 de pilotage est configurée pour, à l'état désactivé de la suspension 9 et non actionné de l'organe 16 de commande du dispositif 15 de commande de l'actionneur 10, interdire l'activation de la suspension 9 au moins lorsque l'angle mesuré par le capteur 22 de mesure de l'angle formé entre le plan du plancher 21 et l'axe longitudinal de l'essieu 5 avant du châssis 2 est à l'extérieur d'une plage angulaire prédéterminée.

L'activation de la suspension peut donc être refusée y compris lorsqu'elle est demandée par le conducteur de l'engin par actionnement de l'organe 13 d'activation/désactivation lorsque les conditions d'activation qui permettraient un fonctionnement sûr de l'engin ne sont pas remplies.

En pratique, le fonctionnement de l'engin peut s'opérer comme suit :
Le bras de levage est baissé, le conducteur de l'engin actionne l'organe 13 d'activation/désactivation de la suspension 9. Si les conditions le permettent, l'activation de la suspension 9 est opérée par ouverture de la liaison 12 fluidique entre l'actionneur 10 et les accumulateurs 11.

Si le conducteur de l'engin actionne le bras de levage dans le sens d'une élévation et que la valeur de l'angle mesurée par le capteur 4 de mesure de l'inclinaison du bras de levage est supérieure à une valeur seuil prédéterminée, la suspension est automatiquement désactivée par fermeture de la liaison 12 fluidique entre actionneur et accumulateur.

Dans cet état, le conducteur de l'engin peut décider de faire varier l'angle formé entre l'essieu avant et le châssis 2 par actionnement de l'organe 16 de commande de l'actionneur 10.

Une fois le bras rabaissé, l'unité 14 de pilotage peut commander l'activation automatique de la suspension par ouverture de la liaison 12 fluidique si l'organe 16 de commande de l'actionneur 10 n'est pas actionné et si les autres conditions de fonctionnement en sécurité de l'engin sont remplies. Cette activation peut ainsi s'opérer si l'angle mesuré entre le plancher 21 et l'axe longitudinal de l'essieu avant du châssis 2 est à l'intérieur d'une plage angulaire prédéterminée.

Bien évidemment, d'autres conditions d'activation/désactivation de la suspension 9 à l'aide de capteurs ou d'actionneurs reliés à l'unité 14 de pilotage peuvent être envisagées sans sortir du cadre de l'invention.

## Revendications

1. Engin (1) de levage comprenant un châssis (2), un bras (3) de levage monté sur ledit châssis (2), mobile au moins à pivotement entre une position haute et une position basse, au moins un capteur (4) de mesure de l'inclinaison du bras (3) de levage par rapport au châssis (2), ledit châssis (2) étant un châssis roulant équipé d'au moins un essieu (5) avant et un essieu (6) arrière, l'essieu (6) arrière étant monté pivotant autour d'un axe (25) parallèle à l'axe longitudinal de l'engin (1), au moins l'un des essieux (5, 6) étant équipé d'une suspension (9),
**caractérisé en ce que** l'essieu (6) arrière pivotant est monté de manière permanente libre à pivotement, c'est-à-dire qu'il n'existe pas de moyens de blocage de la liaison à pivotement entre l'essieu arrière et le châssis, à l'intérieur d'une plage angulaire délimitée par deux butées (8) portées par ledit châssis (2), **en ce que** l'essieu (5) avant est couplé au châssis (2) par une liaison (26) pivot d'axe parallèle à l'axe longitudinal de l'engin (1), **en ce que** la suspension (9) équipe l'essieu (5) avant pour permettre d'amortir le pivotement relatif entre l'essieu (5) avant et le châssis (2), **en ce que** la suspension (9) de l'essieu (5) avant comprend au moins un actionneur (10) hydraulique disposé entre l'essieu (5) avant et le châssis (1) et reliant l'essieu (5) avant au châssis (1), un ou plusieurs amortisseurs (11) dont au moins l'un est formé par un accumulateur d'énergie restituable et au moins une liaison (12) fluidique obturable entre l'actionneur (10) et le ou les amortisseurs (11), **en ce que** ladite suspension (9) est une suspension (9) activable/désactivable, **en ce que** ladite suspension (9) est désactivée à l'état obturé de la liaison (12) fluidique, **en ce que** ladite suspension (9) est désactivée au moins lorsque la valeur d'angle mesurée par le capteur (4) de mesure de l'inclinaison du bras (3) de levage est supérieure à une valeur seuil prédéterminée et **en ce que** l'engin (1) présente au moins une configuration dans laquelle l'essieu (6) arrière pivotant est monté libre à pivotement et la suspension (9) équipant l'essieu (5) avant est à l'état activé pour un montage libre à pivotement de l'essieu (5) avant.

2. Engin (1) de levage selon la revendication 1, **caractérisé en ce que** l'engin (1) comprend un organe (13) d'activation/désactivation de la suspension (9) actionnable par le conducteur de l'engin (1).

3. Engin (1) de levage selon l'une des revendications 1 ou 2, **caractérisé en ce que** l'engin (1) comprend une unité (14) de pilotage configurée pour commander une activation ou une désactivation de la suspension (9) au moins en fonction des données fournies par le capteur (4) de mesure de l'inclinaison du bras (3) de levage.

4. Engin (1) de levage selon la revendication 3 prise en combinaison avec la revendication 2, **caractérisé en ce que** l'unité (14) de pilotage et/ou l'organe (13) d'activation/désactivation de la suspension (9) actionnable par le conducteur de l'engin sont configurés pour commander une activation de la suspension (9) par ouverture de la liaison (12) fluidique et une désactivation de la suspension (9) par fermeture de la liaison (12) fluidique.

5. Engin (1) de levage selon la revendication 2 ou l'une des revendications 3 ou 4 prise en combinaison avec la revendication 2, **caractérisé en ce que** l'engin (1) comprend un dispositif (15) de commande de l'actionneur (10) comprenant un organe (16) de commande de l'actionneur (10) actionnable par le conducteur de l'engin et **en ce que** l'unité (14) de pilotage est configurée pour commander la désactivation de la suspension (9) à l'état actionné de l'organe (16) de commande de l'actionneur (10) actionnable par le conducteur de l'engin.

6. Engin (1) de levage selon la revendication 5, **caractérisé en ce que** le dispositif (15) de commande de l'actionneur (10) comprend un distributeur (17) hydraulique interposé entre une source (18) d'alimentation en fluide sous pression et l'actionneur (10), ledit distributeur (17) étant monté mobile entre des positions comprenant au moins une position de non alimentation en fluide de l'actionneur et des positions d'alimentation en fluide de l'actionneur (10), ledit distributeur (17) étant en position d'alimentation en fluide de l'actionneur (10), à l'état actionné de l'organe (16) de commande de l'actionneur (10) actionnable par le conducteur de l'engin.

7. Engin (1) de levage selon l'une des revendications 5 ou 6, **caractérisé en ce que** le châssis (2) comprend une cabine (20) de conduite équipée d'un plancher (21), **en ce que** l'engin (1) comprend un capteur (22) de mesure représentatif de l'angle formé entre le plan du plancher (21) et l'axe longitudinal de l'essieu (5) avant du châssis (2) et **en ce que** l'unité (14) de pilotage est configurée pour, à l'état désactivé de la suspension (9) et non actionné de l'organe (16) de commande du dispositif (15) de commande de l'actionneur (10), interdire l'activation de la suspension (9) au moins lorsque l'angle mesuré par le capteur (22) de mesure de l'angle formé entre le plan du plancher (21) et l'axe longitudinal de l'essieu (5) avant du châssis (2) est à l'extérieur d'une plage angulaire prédéterminée.

8. Engin (1) de levage selon l'une des revendications 1 à 7, **caractérisé en ce que** l'actionneur (10) est formé par un vérin (100) hydraulique double effet ou deux vérins (101) hydrauliques simple effet disposés chacun entre l'essieu (5) avant et le châssis (2), **en ce que** le ou chaque vérin (100 ; 101) de l'actionneur (10) comprend un corps (1000) et une tige (1001) montée mobile à coulissement à l'intérieur du corps (1000) et divisant le corps (1000) en deux chambres et **en ce que** la tige (1001) du ou de chaque vérin (100 ; 101) est montée libre à coulissement à l'intérieur dudit corps (1000) de vérin associé à l'état ouvert de la liaison (12) fluidique obturable entre l'actionneur (10) et le ou les amortisseurs (11).

9. Engin (1) de levage selon l'une des revendications 1 à 8, **caractérisé en ce que** le ou au moins l'un, de préférence chacun, des amortisseurs (11) qui est formé par un accumulateur d'énergie restituable, est un accumulateur hydraulique ou hydropneumatique, en particulier un accumulateur à vessie, ou à piston, ou à membrane.

10. Engin (1) de levage selon la revendication 2 ou l'une des revendications 3 à 9 prise en combinaison avec la revendication 2, **caractérisé en ce que** l'engin (1) comprend un capteur (24) de mesure de la vitesse de déplacement de l'engin et un capteur (23) de mesure de l'angle de braquage des roues de l'essieu (5) avant et **en ce que** l'unité (14) de pilotage est configurée pour commander une désactivation de la suspension (9) au moins en fonction des données fournies par lesdits capteurs (23, 24).

## Patentansprüche

1. Hebemaschine (1), umfassend einen Rahmen (2), einen Hebearm (3), der auf den Rahmen (2) montiert ist, der mindestens schwenkend zwischen einer oberen Position und einer unteren Position beweglich ist, mindestens einen Sensor (4) zum Messen der Neigung des Hebearms (3) mit Bezug auf den Rahmen (2), wobei der Rahmen (2) ein rollender Rahmen ist, der mit mindestens einer vorderen Radachse (5) und einer hinteren Radachse (6) ausgestattet ist, wobei die hintere Radachse (6) schwenkend um eine Achse (25) parallel zur Längsachse der Maschine (1) montiert ist, wobei mindestens eine der Radachsen (5, 6) mit einer Aufhängung (9) ausgestattet ist,
**dadurch gekennzeichnet, dass** die hintere schwenkende Radachse (6) auf permanente Weise frei schwenkend montiert ist, d. h. dass keine Blockiermittel der Schwenkverbindung zwischen der hinteren Radachse und dem Rahmen im Inneren eines Winkelbereichs vorhanden sind, der von zwei Anschlägen (8), getragen von dem Rahmen (2), begrenzt ist, dadurch dass die vordere Radachse (5) mit dem Rahmen (2) durch eine Schwenkverbindung (26) mit paralleler Achse zur Längsachse der Maschine (1) gekoppelt ist, dadurch, dass die Aufhängung (9) in die vordere Radachse (5) eingebaut ist, um zu ermöglichen, dass das relative Schwenken zwischen der vorderen Radachse (5) und dem Rahmen (2) gedämpft ist, dadurch, dass die Aufhängung (9) der vorderen Radachse (5) mindestens eine hydraulische Betätigungsvorrichtung (10) umfasst, die zwischen der vorderen Radachse (5) und dem Rahmen (1) angeordnet ist und die vordere Radachse (5) mit dem Rahmen (1) verbindet, ein oder mehrere Dämpfer (11), von denen mindestens einer von einem Speicher erneuerbarer Energie gebildet ist, und mindestens eine fluidische Verbindung (12), die zwischen der Betätigungsvorrichtung (10) und dem oder den Dämpfern (11) verschlossen werden kann, dadurch, dass die Aufhängung (9) eine aktivierbare/deaktivierbare Aufhängung (9) ist, dadurch, dass die Aufhängung (9) im deaktivierten Zustand der fluidischen Verbindung (12) verschlossen ist, dadurch, dass die Aufhängung (9) mindestens dann deaktiviert ist, wenn der vom Messsensor (4) gemessene Winkelwert der Neigung des Hebearms (3) grösser als ein vorbestimmter Schwellenwert ist, und dadurch, dass die Maschine (1) mindestens eine Konfiguration aufweist, in der die hintere Schwenkradachse (6) frei schwenkend montiert ist und sich die Aufhängung (9), die in die vordere Radachse (5) eingebaut ist, in einem aktiven Zustand für eine frei schwenkende Montage der vorderen Radachse (5) befindet.

2. Hebemaschine (1) nach Anspruch 1, **dadurch gekennzeichnet, dass** die Maschine (1) ein Organ (13) zur Aktivierung/Deaktivierung der Aufhängung (9) umfasst, das vom Fahrer der Maschine (1) betätigt werden kann.

3. Maschine (1) nach einem der Ansprüche 1 oder 2, **dadurch gekennzeichnet, dass** die Maschine (1) eine Steuereinheit (14) umfasst, die konfiguriert ist, um eine Aktvierung oder eine Deaktivierung der Aufhängung (9) mindestens in Funktion der Daten zu veranlassen, die vom Sensor (4) zum Messen der Neigung des Hebearms (3) geliefert werden.

4. Hebemaschine (1) nach Anspruch 3 in Kombination mit Anspruch 2, **dadurch gekennzeichnet, dass** die Steuereinheit (14) und/oder das Organ (13) zur Aktivierung/Deaktivierung der Aufhängung (9), das durch den Fahrer der Maschine betätigt werden kann, konfiguriert sind, um eine Aktivierung der Aufhängung (9) durch das Öffnen der fluidischen Verbindung (12) und eine Deaktivierung der Aufhängung (9) durch das Schließen der fluidischen Verbindung (12) zu veranlassen.

5. Hebemaschine (1) nach Anspruch 2 oder einem der Ansprüche 3 oder 4 in Kombination mit Anspruch 2, **dadurch gekennzeichnet, dass** die Maschine (1) eine Vorrichtung (15) zur Steuerung der Betätigungsvorrichtung (10) umfasst, umfassend ein Organ (16) zur Steuerung der Betätigungsvorrichtung (10), das durch den Fahrer der Maschine betätigt werden kann, und dadurch, dass die Steuereinheit (14) konfiguriert ist, um die Deaktivierung der Aufhängung (9) im betätigten Zustand des Organs (16) zur Steuerung der Betätigungsvorrichtung (10) zu veranlassen, das durch den Fahrer der Maschine betätigt werden kann.

6. Hebemaschine (1) nach Anspruch 5, **dadurch gekennzeichnet, dass** die Vorrichtung (15) zur Steuerung der Betätigungsvorrichtung (10) einen hydraulischen Verteiler (17) umfasst, der zwischen einer Quelle (18) zur Versorgung mit Fluid unter Druck und der Betätigungsvorrichtung (10) angebracht ist, wobei der Verteiler (17) beweglich zwischen Positionen montiert ist, die mindestens eine Position der nicht Versorgung mit Fluid der Betätigungsvorrichtung und Positionen der Versorgung mit Fluid der Betätigungsvorrichtung (10) umfasst, wobei sich der Verteiler (17) im betätigten Zustand des Organs (16) zur Steuerung der Betätigungsvorrichtung (10), das durch den Fahrer der Maschine betätigt werden kann, in der Positionen der Versorgung mit Fluid der Betätigungsvorrichtung (10) befindet.

7. Hebemaschine (1) nach einem der Ansprüche 5 oder 6, **dadurch gekennzeichnet, dass** der Rahmen (2) eine Führerkabine (20) umfasst, die mit einem Boden (21) ausgestattet ist, dadurch, dass die Maschine (1) einen Messsensor (22) umfasst, der repräsentativ für den Winkel ist, der zwischen der Ebene des Bodens (21) und die Längsachse der vorderen Radachse (5) des Rahmens (2) gebildet ist, und dadurch, dass die Steuereinheit (14) konfiguriert ist, um im deaktivierten Zustand der Aufhängung (9) und im nicht betätigten Zustand des Steuerorgans (16) der Vorrichtung (15) zur Steuerung der Betätigungsvorrichtung (10) die Aktivierung der Aufhängung (9) mindestens dann zu unterbinden, wenn der vom Messsensor (22) gemessene Winkel des Winkels, der zwischen der Ebene des Bodens (21) und der Längsachse der vorderen Radachse (5) des Rahmens (2) gebildet ist, auf der Außenseite eines vorbestimmten Winkelbereichs ist.

8. Hebemaschine (1) nach einem der Ansprüche 1 bis 7, **dadurch gekennzeichnet, dass** die Betätigungsvorrichtung (10) von einem hydraulischen Zylinder (100) mit doppelter Wirkung oder zwei hydraulischen Zylindern (101) mit einfacher Wirkung gebildet ist, die jeweils zwischen der vorderen Radachse (5) und dem Rahmen (2) angeordnet sind, dadurch, dass der oder jeder Zylinder (100; 101) der Betätigungsvorrichtung (10) einen Körper (1000) und einen Stift (1001) umfasst, der beweglich gleitend im Inneren des Körpers (1000) montiert ist und den Körper (1000) in zwei Kammern unterteilt, und dadurch, dass der Stift (1001) des oder jedes Zylinders (100; 101) frei beweglich gleitend im Inneren des Zylinderkörpers (1000) montiert ist, der im offenen Zustand der fluidischen Verbindung (12), die zischen der Betätigungsvorrichtung (10) und dem oder den Dämpfern (11) verschlossen werden kann, assoziiert ist.

9. Hebemaschine (1) nach einem der Ansprüche 1 bis 8, **dadurch gekennzeichnet, dass** der oder mindestens einer, vorzugsweise jeder der Dämpfer (11), der von einem Speicher erneuerbarer Energie gebildet ist, ein hydraulischer oder hydropneumatischer Speicher ist, insbesondere ein Blasen, Kolben- oder Membranspeicher.

10. Hebemaschine (1) nach Anspruch 2 oder einem der Ansprüche 3 bis 9 in Kombination mit Anspruch 2, **dadurch gekennzeichnet, dass** die Maschine (1) einen Sensor (24) zum Messen der Verschiebungsgeschwindigkeit der Maschine und einen Sensor (23) zum Messen des Lenkwinkels der Räder der vorderen Radachse (5) umfasst, und dadurch, dass die Steuereinheit (14) konfiguriert ist, um eine Deaktivierung der Aufhängung (9) mindestens in Funktion der Daten zu veranlassen, die von den Sensoren (23, 24) geliefert werden.

## Claims

1. A lifting machine (1) comprising a chassis (2), a lifting arm (3) mounted on said chassis (2) and moveable at least pivotably between a high position and a low position, at least one sensor (4) for measuring the inclination of the lifting arm (3) in relation to the chassis (2), said chassis (2) being a rolling chassis fitted with at least one front axle (5) and one rear axle (6), the rear axle (6) being mounted pivotably about an axis (25) parallel to the longitudinal axis of the machine (1), at least one of the axles (5, 6) being fitted with a suspension assembly (9),
**characterized in that** the pivoting rear axle (6) is mounted permanently free to pivot, that is, there are no means blocking the pivotable link between the rear axle and the chassis, within an angular range delimited by two stops (8) carried on said chassis (2), **in that** the front axle (5) is coupled to the chassis (2) by a pivot link (26) with an axis parallel to the longitudinal axis of the machine (1), **in that** the suspension assembly (9) is fitted to the front axle (5) to damp the relative pivoting between the front axle (5) and the chassis (2), **in that** said suspension assembly (9) of the front axle (5) comprises at least one hydraulic actuator (10) arranged between the front axle (5) and the chassis (1) that links the front axle (5) to the chassis (1), one or more shock absorbers (11), at least one of which is formed by a returnable energy accumulator, and at least one closable fluid link (12) between the actuator (10) and the shock absorber(s) (11), **in that** said suspension assembly (9) is an activatable/deactivatable suspension assembly (9), **in that** said suspension assembly (9) is deactivated when the fluid link (12) is in the closed state, **in that** said suspension assembly (9) is deactivated at least when the angular value measured by the sensor (4) for measuring the inclination of the lifting arm (3) is greater than a predetermined threshold value, and **in that** the machine (1) has at least one configuration in which the pivoting rear axle (6) is mounted free to pivot and the suspension assembly (9) fitted to the front axle (5) is in the activated state to enable the front axle (5) to be mounted to pivot freely.

2. The lifting machine (1) according to claim 1, **characterized in that** the machine (1) comprises a member (13) for activating/deactivating the suspension assembly (9) that is actuated by the driver of the machine (1).

3. The lifting machine (1) according to one of claims 1 or 2, **characterized in that** the machine (1) comprises a control unit (14) that is configured to command the activation or deactivation of the suspension assembly (9) at least as a function of the data provided by the sensor (4) for measuring the inclination of the lifting arm (3).

4. The lifting machine (1) according to claim 3 in combination with claim 2, **characterized in that** the control unit (14) and/or the member (13) for activating/deactivating the suspension assembly (9) that can be actuated by the driver of the machine are configured to command the activation of the suspension assembly (9) by opening the fluid link (12) and the deactivation of the suspension assembly (9) by closing the fluid link (12).

5. The lifting machine (1) according to claim 2 or one of claims 3 or 4 in combination with claim 2, **characterized in that** the machine (1) comprises a device (15) for controlling the actuator (10) comprising a member (16) for controlling the actuator (10) actuated by the driver of the machine and **in that** the control unit (14) is configured to command the deactivation of the suspension assembly (9) when the member (16) for controlling the actuator (10) actuated by the driver of the machine is in the actuated state.

6. The lifting machine (1) according to claim 5, **characterized in that** the device (15) for controlling the actuator (10) comprises a hydraulic distributor (17) interposed between a pressurized-fluid feed source (18) and the actuator (10), said distributor (17) being mounted moveably between positions including at least one position in which no fluid is being fed to the actuator and positions in which fluid is fed to the actuator (10), said distributor (17) being in a position feeding fluid to the actuator (10) when the member (16) for controlling the actuator (10) actuated by the driver of the machine is in the actuated state.

7. The lifting machine (1) according to one of claims 5 or 6, **characterized in that** the chassis (2) comprises a driving cab (20) fitted with a floor (21), **in that** the machine (1) comprises a sensor (22) for measuring the angle formed between the plane of the floor (21) and the longitudinal axis of the front axle (5) of the chassis (2) and **in that** the control unit (14) is configured, when the suspension assembly (9) is in the deactivated state and the member (16) for controlling the device (15) for controlling the actuator (10) is in the non-actuated state, to prevent the activation of the suspension assembly (9) at least while the angle measured by the sensor (22) for measuring the angle formed between the plane of the floor (21) and the longitudinal axis of the front axle (5) of the chassis (2) is outside a predetermined angular range.

8. The lifting machine (1) according to one of claims 1 to 7, **characterized in that** the actuator (10) is formed by a dual-action hydraulic cylinder (100) or two single-action hydraulic cylinders (101), each of which is arranged between the front axle (5) and the chassis (2), **in that** the or each cylinder (100; 101) of the actuator (10) comprises a body (1000) and a rod (1001) that is mounted slidingly inside the body (1000) and that divides the body (1000) into two chambers, and **in that** the rod (1001) of the or each cylinder (100; 101) is mounted free to slide inside said body (1000) of the associated cylinder when the closable fluid link (12) between the actuator (10) and the shock absorber(s) (11) is in the open state.

9. The lifting machine (1) according to one of claims 1 to 8, **characterized in that** the or at least one, and preferably each, of the shock absorbers (11) is formed by a returnable energy accumulator, such as a hydraulic or hydropneumatic accumulator, in particular a bladder- or piston- or membrane-accumulator.

10. The lifting machine (1) according to claim 2 or one of claims 3 to 9 in combination with claim 2, **characterized in that** the machine (1) comprises a sensor (24) for measuring the movement speed of the machine and a sensor (23) for measuring the steering angle of the wheels of the front axle (5), and **in that** the control unit (14) is configured to command the deactivation of the suspension assembly (9) at least as a function of the data provided by said sensors (23, 24).
